# EUROPEAN PATENT APPLICATION

(11) **EP 4 122 651 A1**
(43) Date of publication of application: **25.01.2023**
(21) Application number: 21187466.4
(22) Date of filing: 23.07.2021
(51) Int. Cl.: B25J 9/00, B25J 9/06, B25J 17/02

(54) **ROBOTIC JOINT DEVICE AND ROBOT ARM**

(71) Applicant: Siemens Aktiengesellschaft, 80333 München (DE); Friedrich-Alexander-Universität Erlangen-Nürnberg, 91054 Erlangen (DE)
(72) Inventor: Bachmann, Christian, 80686 München (DE); Gerlich, Matthias, 80636 München (DE); Nemoto, Takeru, 81677 München (DE); Walter, Jonas, 91058 Erlangen (DE)

(57) **Abstract**

A robotic joint device (100) is provided, comprising
- a first rigid element (1) with a first central axis (A1) and a second rigid element (2) with a second central axis (A2),
- where the first rigid element (1) has a base member (10) and an elongated rod (15) which is rigidly attached to the base member (10), the rod (15) extending along the first central axis (A1) and being aligned with the second central axis (A2) when the joint device is in a central reference position,
- where the first rigid element (1) has three or four first anchor points (P1) distributed over the periphery of the first rigid element (1),
- where the second rigid (2) element has a corresponding number of second anchor points (P2) distributed over the periphery of the second rigid element (2), and each second anchor point (P2) is connected to a corresponding first anchor point (P1) by an actuated rope (Ra),
- where the second rigid element (2) has at least three further anchor points (P3) distributed over the periphery of the second rigid element (2), and each further anchor point (P3) is connected to a tip (17) of the elongated rod (15) of the first rigid element (1) by a passive rope (Rp),
- where the total number of actuated ropes (Ra) is three or four and the robotic joint device provides a total of two rotational degrees of freedom.

Furthermore, a robot arm (200) with such a robotic joint device (100) is provided.

## Description

The present invention relates to a robotic joint device comprising two rigid elements, which are connected by a kinematic chain comprising a number of ropes. The invention further relates to a robot arm comprising such a robotic joint device.

There has been much recent development in the field of robotics, with a particular focus on collaborative robots (so-called "cobots"), which are intended for direct human-robot interaction within a shared space and without additional safety barriers between them. Important application fields of such cobots are automated manufacturing, but also tasks in households and medical applications.

Most robot arms comprise several joint devices, connected in series by a number of arm links, similar to the layout of a human arm. Typical robot arms for industrial manufacturing contain a total of three to seven joints. The most widespread type of robot arms is based on a number of joints, connected in series, where each joint provides a single rotational degree of freedom. The resulting three to seven rotational degrees of freedom allow a reasonable range of motion and range of possible orientations for an end effector that is attached to the most distal joint.

Recent development efforts have focused on designing robotic joint devices which are lighter and more compact compared to existing solutions. This is particularly important with respect to safety aspects in environments where collisions between robots and co-working humans cannot be completely excluded. However, at the same time it is desirable for the robotic joints to handle large loads and to effect a high torque at the position of the end effector. Further design goals are low manufacturing cost and high robustness, which often makes simpler designs more attractive than complicated ones.

Another known type of robot is the parallel arm robot, for example the so-called "delta robot". This type of robot has several parallel kinematic chains connecting a base element and a moving element. A basic delta robot provides three translational degrees of freedom, but no rotational movement. The moving components are the end effector and three parallelograms, which move the end effector by their joint motion. Each parallelogram has two rods, which maintain their parallel alignment during the motion, and which are quite light weight. As a result, robots of this type can be quite fast and precise. Therefore, they are used for example in packaging applications, for robotic surgery and in 3D printers. A drawback of this working principle is that delta robots are relatively expensive due to their complexity and that their load capacity is relatively low.

Another recent design proposal is a tensegrity inspired cable-driven joint. This type of robotic joint has six actuated and three non-actuated ropes connecting a base element and a moving element. This results in three rotational degrees of freedom between these two rigid elements. This design can also be quite fast and light due to the low mass of its moving parts. However, this type of joint is rather complex due to the relatively large number of actuators which is required for achieving only three degrees of freedom in the movable part. A joint of this type is described in the paper by J. M. Friesen, J. L. Dean, T. Bewley and V. Sunspiral, "A tensegrity-inspired compliant 3-DOF compliant joint", Proc. IEEE Int. Conf. Robot. Autom., pp. 3301-3306, May 2018. In the following, it will be referred to as the Friesen joint.

It is a goal of the present invention to provide an alternative robotic joint device, which overcomes some of the above-mentioned disadvantages. In particular, a robotic joint device shall be provided, which is light and compact, which can handle relatively large loads and is also rather simple in design to allow for cheap manufacturing and robustness in use. A further goal of the invention is to provide a robot arm with such a joint device.

These objectives of the invention are achieved by claim 1 with respect to the robotic joint device and by claim 10 with respect to the robot arm.

The robotic joint device according to the invention comprises a first rigid element with a first central axis and a second rigid element with a second central axis. The first element has a base member and an elongated rod which is rigidly attached to the base member, the rod extending along the first central axis. The rod (and in turn the first central axis) is aligned with the second central axis when the joint device is at a central reference position. The first rigid element (and in particular its base member) has three or four first anchor points distributed over its periphery. The second rigid element has the same number of second anchor points distributed over its periphery. Each second anchor point is connected to a corresponding first anchor point by an actuated rope. The second rigid element has at least three further anchor points distributed over its periphery, and each further anchor point is connected to a tip of the elongated rod of the first rigid element by a passive rope. The total number of actuated ropes is either three or four, and the robotic joint provides a total number of exactly two rotational degrees of freedom.

So, in other words, the arrangement of active and passive ropes allows a relative rotational movement between the two rigid elements with respect to two rotational degrees of freedom. As it is a relative motion, either one of the two rigid elements can be fixed and the other one can be movable - or both can be movable in absolute coordinates.

The first rigid element comprises a base member and a rod. In particular, the base member can have a generally flat shape, i.e. it is not elongated, in contrast to the rod. However, this generally flat shape does not have to be planar. It could also be curved or arched shape, from which the elongated rot extends in the direction of the first central axis. The rod is preferably attached in a central position of this base member.

The above-mentioned "central reference position" is the base position where the two axes of the two rigid elements are co-aligned and form a common central axis. Each of the two rigid elements can have a three-fold or four-fold rotational symmetry around its respective central axis, although this is not necessary for the principle to work. If present, the three-fold or four-fold rotational symmetry could then also apply to the whole joint device, when it is in its central reference position. This overall symmetry is broken, when the two rigid elements are tilted relative to each other, according to one of the two rotational degrees of freedom (or both).

The above-mentioned "passive ropes" are non-actuated ropes of generally fixed length. In other words, they are rigidly attached to fixed anchor points on both sides, and as long as there is a tension on the fixed ropes they can be effectively regarded as connections of fixed lengths. In practice, there is of course a certain softness in these fixed connections due to a limited stiffness in the ropes themselves, which depends on the choice of rope material and in the way that any constituent yarns, fibers or strands are twisted or braided.

The three or four actuated ropes can effect the relative rotational motion of the two rigid elements. Generally, the three or four corresponding actuators can either be part of the joint device, or they can be placed somewhere else, e.g. in a different part of an overall robot arm, such as in an adjoining arm link or even further away, closer to an overall base. In effect, the actuation of these three or four actuated ropes can cause an off-axis tilting of the two rigid elements with respect to each other. By this tilting motion, the elongated rod is tilted away from the central axis of the second rigid element, so the co-alignment of the two axes is lost by this movement. In other words, the elongated rod functions as a tilt element. This functionality is enabled by the fact that the tip of the rod is supported against the second rigid element by three or more passive ropes, provided that there is a tension on these passive ropes.

Overall, the working principle of this joint is similar to the three-degree-of-freedom joint described in the above-mentioned Friesen joint. Also, the usable workspace can be derived by similar methods. The most important difference is, however, that our joint only has three or four actuated ropes and therefore only provides two rotational degrees of freedom. This allows for an even more simple joint design, with fewer actuators to be implemented in the overall robot arm. For simplicity, the number three is generally preferred. As a result, the robotic joint and also the overall arm can be lighter, more compact and possibly also cheaper and more robust. Compared to other design principles, this joint can also handle relatively large loads, similar to the load handling of the Friesen joint.

The joint according to this invention only provides two rotational degrees of freedom, which may be seen as a drawback in terms of the achievable range of motion. However, this loss of one degree of freedom goes hand in hand with two or three fewer actuators, so the efficiency in terms of "degrees of freedom per actuator" is improved in the case of three actuated ropes. The one rotational degree of freedom which is sacrificed is the twist motion around the central axis of the first element. Our invention is based on the insight that this twist motion can easily be provided by an additional joint in the overall robot arm, so that it is not necessary to combine all three rotational motions in one parallel rope-driven joint. This leads to a simplified design in the rope-driven joint, which in turn can result in a lighter, more compact, cheaper and/or more robust implementation of this selected joint. Especially, if this selected joint according to the present invention is one of the more distal joints in an overall arm, and if the missing twist functionality is provided by a more proximal rotational joint, the overall robot arm can achieve a similar or even better range of motion, with a reduced mass and size in the outer joint(s). Providing the twist motion by a separate rotational joint will typically lead to a larger range of accessible twist angles than the rope-driven implementation of the twist described by Friesen et al. Also, the torque applied to the twist rotation can be higher if a separate joint is used. For an optimum performance and also with regard to safety aspects in a cobot application, a light and compact design of the outermost joint(s) is much more important than for the joints that are closer to the base. So an overall consideration of the relative parameters like usable range of motion and applicable torque as well as lightness and compactness, particularly in the more distal joints, shows that the present invention provides a favorable alternative for the design of a robotic joint device and/or robot arm, particularly for cobot applications.

The robot arm according to the invention comprises one or more robotic joints, where at least one selected robotic joint comprises a joint device according to the present invention. The robot arm may optionally comprise further joint devices, particularly of a different type. The advantages of the overall robot arm largely correspond to the advantages of the joint device which have been described above.

Advantageous configurations and embodiments of the method according to the invention follow from the claims dependent on claims 1 and 10 as well as the following description. The advantageous features of the joint device and the robot arm can generally be combined.

The three or four first anchor points define a first circle with radius r1, and the corresponding number of second anchor points define a second circle with radius r2. In particular, the first central axis can pass the center C1 of the first circle, and the second central axis can pass the center C2 of the second circle. According to a preferred embodiment, r2 is larger than r1. In other words, the base member of the first rigid element (which comprises the rod) has a smaller effective diameter than the corresponding base member of the second rigid element (against which the rod is suspended by means of the passive ropes). It is generally favorable that this suspension is attached to a base member with a comparatively large circumference. The base member of the first rigid element can be comparatively smaller, so that the three or four actuated ropes "open up" and extend away from each other on their path from the first anchor points towards the second anchor points. This tapered orientation of the actuated ropes is also favorable with respect to providing the tilting motion in the overall joint device. A particularly preferred range for the ratio r2/r1 is between 2.5 and 3.5. For example, the ratio can be around three. A ratio in this range can help to achieve a relatively large useful workspace.

The elongated rod extends over an effective rod length 1 between its tip (where the passive ropes are attached) and the center of the first circle (within the plane of the first anchor points). The center C1 of the first circle and the center C2 of the second circle are separated by a distance d, when the joint device is in its central reference position. According to a preferred embodiment, this distance d is smaller than the effective rod length 1. In other words, the rod is long enough so that it pierces through the plane of the second anchor points. This configuration is preferred because a tightening of one or more of the actuated ropes will lead to a pulling force which tends to pull the two rigid elements towards each other. This unwanted translational motion can then be counteracted by the tension in the passive ropes, because if the tip extends beyond the plane of the second base member, this suspension counteracts any motion of the two base members towards each other. A particularly preferred range for the ratio 1/d is between 1.05 and 1.2. In particularly, the ratio can be between 1.1 and 1.15 so that the length 1 is 10% to 15% larger than the distance d. Again, this is favorable in order to achieve a relatively large useful workspace.

According to a preferred embodiment, the second rigid element has a base member with the shape of a ring or a dome. This is particularly advantageous for those embodiments where the length 1 is larger than the distance d, as described above. In this case, the ring or dome can enclose the part of the rod (close to its tip) which pierces through the plane of the second anchor points.

According to another favorable embodiment, the first anchor points can be evenly distributed over the periphery of the first rigid element (in particular its base member), and the second anchor points can be evenly distributed over the periphery of the second rigid element (in particular its base member). In a particularly favorable implementation, both rigid elements can have a three-fold or four-fold rotational symmetry. The overall joint device can share this symmetry. Such a symmetrical configuration makes the joint device rather easy to assemble, to tension, to calibrate and/or to align in its reference position. There are two alternative ways to achieve a three-fold overall symmetry of the second rigid element: According to a first alternative, the three second anchor points can be at the same angular positions as the further anchor points, with 120° angles between these three locations. According to a second alternative, the three second anchor points can be staggered with the further anchor points, so that there is a 60° angle between each attachment location. Similar alternatives apply to the case with a four-fold symmetry.

However, it is generally also possible that the number of further anchor points and correspondingly, the number of passive ropes, is larger than the number of actuated ropes. In this case, a symmetric distribution is also preferred. For example, four passive ropes (with the corresponding further anchor points), can be arranged with an angular separation of 90°, while the actuated ropes can be arranged with a three-fold symmetry.

There are many possible and advantageous implementations for the type and location of the actuators which actuate the contraction or extension of the actuated ropes between the corresponding first and second anchor points. According to a first favorable embodiment, the actuated ropes can be actuated by linear actuators or configured to be actuated by linear actuators. Such a linear actor can for example be an electromagnetic actuator, a dielectric elastomer actuator, a hydraulic actuator and/or a shape-memory alloy actuator. These are examples of relatively light types of actuators, but the total size and weight of the specific actuator also depends on the amount of torque that is needed in the two rotational degrees of freedom of the joint device.

According to a second, alternative favorable embodiment, the actuated ropes can be actuated by rotational actuators or configured to be actuated by rotational actuators. In order to translate the rotational motion into a linear extension or contraction of the ropes, each rotational actuator can be combined with a spool, onto which the actuated rope is wound. The rotational actuator can for example be an electromagnetic actuator. This solution can provide high velocity, but at relatively low torque or force. Optionally, this actuator type can be combined with an additional gearing. In this embodiment, a stable state of each actuated rope can be obtained due to a self-locking effect of the corresponding gearing. Generally, this solution can be used to generate a relatively high torque with a light-weight setup. However, the achievable velocity is usually limited. However, the gearing can also introduce some unwanted backlash. Therefore, a direct drive is also possible and can in some cases be favorable, especially if the necessary torque is relatively low.

In a generally preferred embodiment, the second rigid element is configured to be a base element and the first rigid element is configured to be a movable element. In other words, when implemented in a robot arm, the second rigid element can be on the proximal side of the joint (closer to the overall base of the arm) and the first rigid element can be on the distal side of the joint (away from the base). This orientation is preferred, because the first rigid element generally has a smaller diameter, and it is preferrable to have the more compact and lighter end of the joint facing outward. However, the orientation could in principle also be the other way around, as the effected tilt motion is only a relative motion, and both sides joint device can generally be movable in space, e.g. by preceding rotational and/or translational joints. So the first rigid element could also be configured to be a base element, and the second rigid element could be configured to be a movable element.

The actuated ropes and passive ropes do not necessarily have to be separate elements. They could also be specific segments of an overall rope, which is functionally divided into separate sections by applying a tension between two attachment points.

Each rope can be formed from a plurality of yarns, fibers or strands which are twisted or braided. Alternatively, each rope can also consist of a single strand only, so in other words it could form a simple cable. According to preferred embodiments, the material of the ropes can be a metal or a polymer such as an aramid or polyethylene or any other material which can provide a high tensile strength and high axial stiffness at a relatively small rope diameter.

According to a preferred embodiment of the robot arm, the robot arm can comprise one or more further robotic joints, each of which provides a single rotational degree of freedom. In particular, the selected robotic joint (the one configured according to the present invention) can then be a distal joint and the at least one further robotic joint can be a proximal joint. In other words, the overall robot arm can be designed similar to conventional robot arms (which usually have three to seven rotational joints connected in series), but where the outermost two rotational joints are replaced by a joint device according to the present invention. This way, the last two rotational degrees of freedom before the end effector can be combined in a single, relatively light-weight and compact joint.

Generally, the actuators for the at least one selected robotic joint (the joint with the joint device according to the present invention) are located within an arm link which is positioned on a proximal side of the robot arm relative to the selected robotic joint. In other words, the actuators do not need to be a part of the joint device itself, and their weight and size does not have to contribute to the weight and size of this joint device. Instead, the actuators can be located closer to the base, in a part of the robot arm, where additional weight and size matter less.

According to a generally preferred embodiment of the robot arm, it can comprise an end effector which is carried by one of the selected robotic joints, which are configured according to the present invention. In this embodiment, the advantages of the present invention with respect to light weight and compactness can be particularly well leveraged.

According to another generally preferred embodiment of the robot arm, the robot arm can comprise two or more selected robotic joints, each with a joint device according to the present invention. In this case, these selected joints can be mechanically connected in series. This configuration can be used to provide a total of four rotational degrees of freedom with a compact and light-weight setup that only uses a total of six actuated ropes. As a result, the ratio of available degrees of freedom per actuator is better than in the Friesen joint.

Further advantages and details of the invention may be found in the exemplary embodiments described below and in the drawings, in which:
- Figure 1: shows a schematic representation of a robotic joint device according to an example of the invention,
- Figure 2: shows a tilted state of the same joint device,
- Figure 3: shows a projection view of the joint device of Figure 1 along the central axis,
- Figure 4: shows a side view of the same joint device,
- Figure 5: shows a schematic representation of a conventional robot arm and
- Figure 6: shows a schematic representation of a robot arm according to the present invention.

In these figures, the same and corresponding elements share the same reference numerals.

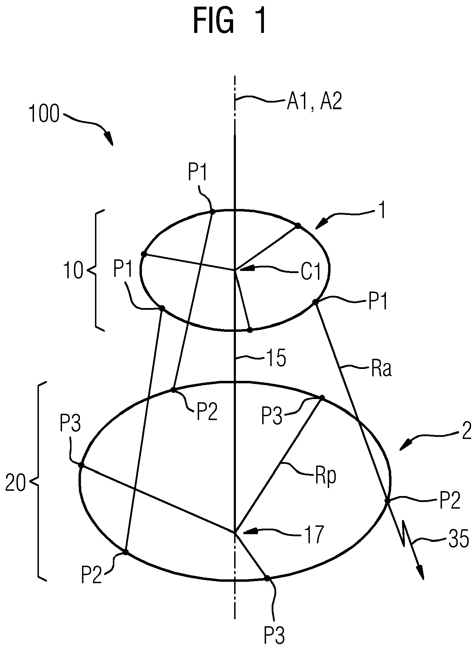

Figure 1 shows a schematic perspective view of the main functional elements of a robotic joint device 100 according to an example of the present invention. The robotic joint device 100 has a first rigid element 1 and a second rigid element 2, and it allows a relative rotational movement with respect to two rotational degrees of freedom between these two rigid elements, as shown below. One of these rigid elements can therefore be regarded as a base element, and the other can be regarded as a movable element (movable relative to the base), but the use of these terms is somewhat arbitrary as in principle both elements can be movable in an overall system. However, when the robotic joint device is built into a robotic arm, one of the two rigid elements is usually closer to the base of the robot arm and will therefore be called the proximal element or base element, and the other rigid element will be referred to as the distal element or the moving element. For example, the larger, second element of this embodiment could be the base element, and the smaller, first rigid element could be the moving element, when this joint device is built into a robot arm.

The first rigid element 1 has an oblate-shaped base member 10 and an elongated rod 15 that projects from this base member 10. The first rigid element has an overall central axis A1, and the rod is aligned along this central axis. The first rigid element 1 has a total of three first anchor points P1 which are distributed over the periphery of its base member 10. In the shown example, the three points P1 are distributed evenly over a first circle, which has its center at the point C1 where the first axis passes through and lies perpendicular to this axis. The first rigid element has a three-fold rotational symmetry. The base member 10 is represented by an outer ring and three spokes, but it should be noted that this is only a topological representation, and many other shapes are possible, where an elongated rod is rigidly connected to a generally flat or oblate base which has three anchor points P1 on its periphery.

The second rigid element 2 has a corresponding oblate-shaped base member 20 with a second central axis A2 passing through it, but no rod. The second rigid element 2 has a total of three second anchor points P2 which are distributed over the periphery of its base member 20. In the shown example, the three points P2 are distributed evenly over a second circle, and the second rigid element also has a three-fold rotational symmetry. Figure 1 shows a central reference position, where the central axis A1 of the first rigid element 1 is co-aligned with the central axis A2 of the second rigid element 2. The second base member 20 is also represented by a ring, but it should again be noted that this is only a topological representation, and other shapes are possible, where three anchor points P2 can be distributed on its periphery, and the rod of the other rigid element can pass through the plain of these points P2. For example, the base member 20 could have the shape of a ring or dome.

The elongated rod 15 of the first rigid element 1 extends towards the second rigid element 2 and pierces through the plane of the second anchor points P2. In other words, the top 17 lies below the second anchor points P2, when the overall joint device has an upright orientation as shown in Figure 1. The tip 17 of the rod 15 is connected to each of the second anchor points P2 by a passive rope Rp of fixed length. Each of these passive ropes Rp is connected to the second base member 20 at a further anchor point P3. These three further anchor points P3 are also distributed evenly over the periphery of the second rigid element 2. In this example, the further anchor points P3 occupy the centers of the gaps between the second anchors points P2 on the perimeter of the second base member 2. However, they could also be at the same azimuthal locations or at any different position (also at a different radius than the points P2). A symmetrical design is generally preferred, but not necessary. The passive ropes Rp create a suspension of the first rigid element 1 against the second rigid element 2. As long as the passive ropes Rp are tensioned, the first rigid element 1 is supported against the second rigid element 2, because the tip of the rod is held fixed in the connection point of the three passive topes Rp. In other words, the suspension counteracts any further approximation of the two base member 10 and 20. However, the suspension still does allow a tilting of the first rigid element against the second rigid element, so the rod can be regarded as a tilt element. In essence, the combination of the rod and the suspension by three passive ropes against the second rigid element provides a similar functionality as a rigid flat base plate which has a rod connected to its center via a rotational ball joint.

The relative rotational motion between the rigid elements 1 and 2 can be effected by the three actuated ropes Ra which connect the first anchor points P1 of the first rigid element 1 with the second anchor points P2 of the second rigid element 2. These ropes Ra can be actuated by actuators that can be placed in another part of an overall system (e.g. in a link of a robot arm) and are therefore not shown here. These actuators can either act to increase a pull on the actuated ropes Ra or release the tension on these ropes, therefore either extending or contracting the effective length of the rope segments (meaning the rope length between the anchor points P1 and P2). For example, an increase of the pulling force applied by one of the actuators is indicated by the arrow 35, which results in a shortening of the corresponding rope section Ra between P1 and P2. The other two actuated ropes will each have to be lengthened by an appropriate amount to allow a relative motion of the two rigid elements 1 and 2 and equilibrating the tension across the whole device.

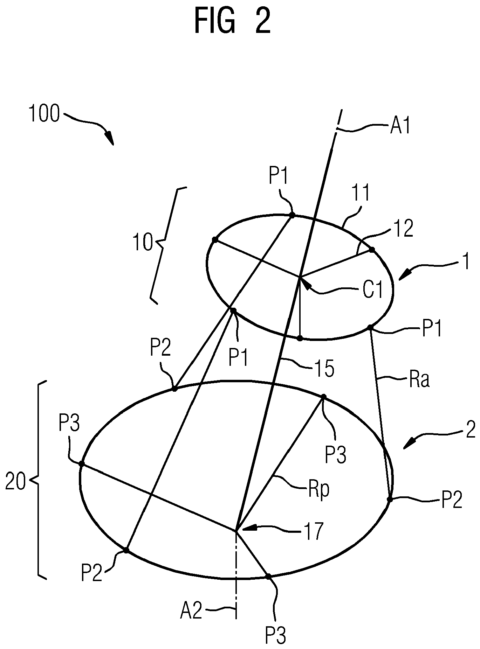

Figure 2 shows a similar schematic representation of the same joint device, where the corresponding shortening of one actuated rope Ra (the one depicted on the right-hand side) has led to a tilting of the rod 15, and together with it a tilting of the whole element 1 against the element 2. This tilting results in a loss of the overall symmetry, in particular a loss in the alignment of the two axes A1 and A2. The tilt that is shown here is just one example of a possible tilt motion. The system also allows off-axis tilts in other directions by adapting the lengths of the three actuated ropes in a corresponding way. The three actuators cannot be operated completely independently. Instead, they need to cooperate in order to comply with the geometrical constraints of the system, particularly the constraint that the three passive ropes and the three active ropes always should be tensioned. In other words, the whole joint device works as a tensegrity structure, where rigid elements are suspended and moved in a suspended network of tension elements. The specific implementation according to the present invention results in a joint device with two rotational degrees of freedom, namely the two off-axis tilt motions (and any combinations thereof). Due to the presence of just three actuated ropes, a twist motion around the central axis is not provided. This third rotational degree of freedom is therefore missing.

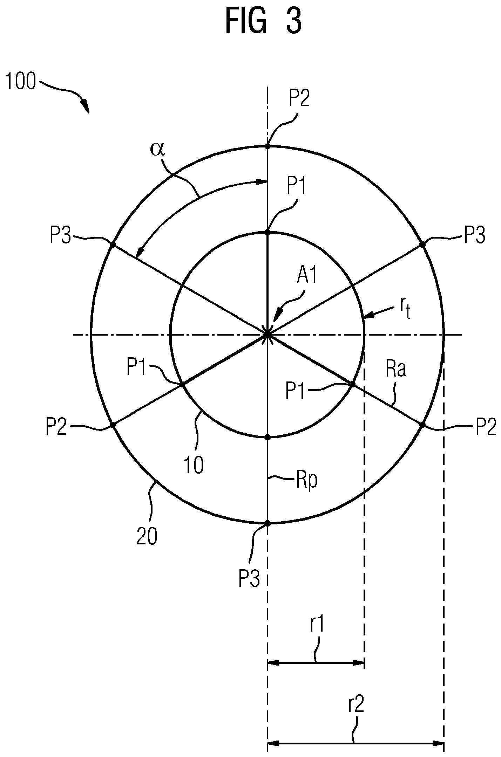

Figure 3 shows a projection view of the joint device of Figure 1 along its central axis A1 (which also corresponds to A2 in the central reference state). As can be seen in this view, the angular spacing α between points P2 and P3 withing the projection is always 60°, resulting in a symmetrical distribution of all anchor points of the second base member 20. Similarly, the anchor points P1 are evenly distributed over the periphery of the first base member 10 with 120° angular spacings between them. r1 represents the radius of a first circle, which is defined by the three first anchor points P1, and r2 represents the radius of a second circle, which is defined by the three second anchor points P2. In this example, r2 is larger than r1, which is the generally preferred configuration.

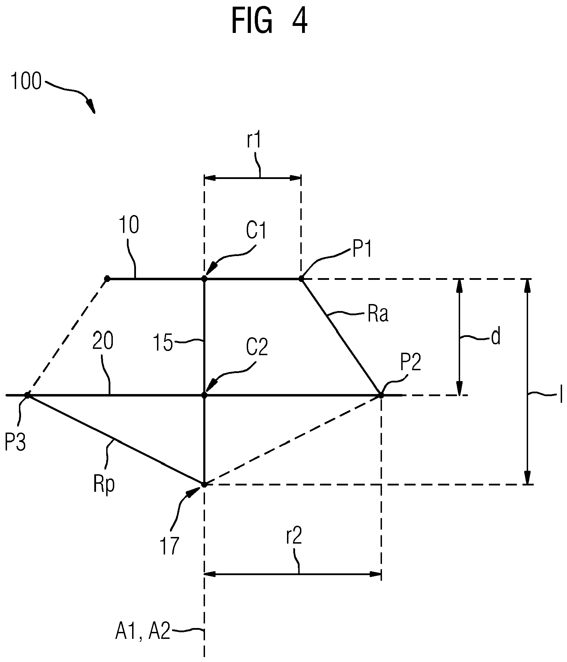

Figure 4 shows a side view of the same joint device 100, also in its central reference state. In this side view, it can be seen how the elongated rod pierces through the plane of the second anchor points P2, such that the tip 17 of the rod is situated below this plane and below the center C2 of the circle that is defined by the three points P2. Here d denotes the distance between the center C1 of the first anchor points P1 and the center C2 of the second anchor points P2. The effective length 1 of the rod 15 (which is the distance between the point C1 and the tip of the rod) is larger than this distance d. It should be noted that all the figures are not to scale, and that relative dimensions cannot be derived from them. In real-life implementations of this concept, the radius r1 can for example be between 1 cm and 10 cm and the distance d can be between 3 cm and 30 cm. The ratios of r2/r1 and 1/d can be chosen according to the favorable ranges given above.

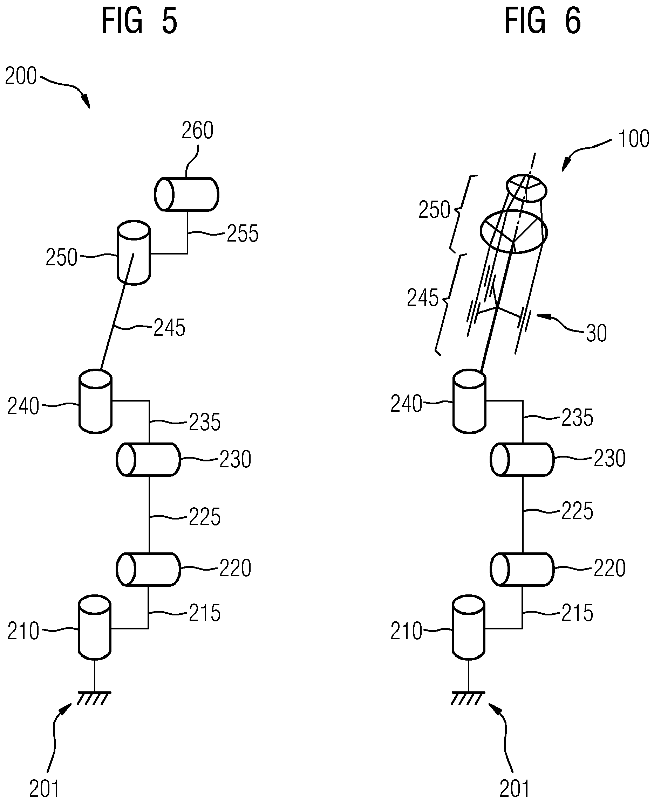

The following two figures show how a joint device according to the present invention can be used to replace two rotational joints of a conventional robot arm. Figure 5 shows a schematic representation of such a conventional robot arm 200 which has a total of six rotational joints, providing six rotational degrees of freedom. However, other numbers of rotational joints (for example three to seven such joints) are also common, e.g. in industrial robots. The robot arm 200 has an overall base 201, where it is attached to a fixed reference system. The rotational joints are labelled 210, 220, 230, 240, 250 and 260 where the joints with the lower numbers are the proximal joints (closer to the base) and the joints with the higher numbers are the distal joints (further away from the base). The joints are interconnected by five arm links 215, 225, 235, 245 and 255 which can either be straight or bent, as indicated schematically by the shape of the connecting lines. The outermost joint 260 can carry an end effector which is not shown here for reasons of simplicity.

Figure 6 shows a schematic representation of a robot arm 200 according to an example of the present invention. This robot arm also has four rotational joints 210 to 240 which are attached to a base 201 and are mechanically connected in series with each other, similar to the robot arm of figure 5. However, here the two outermost rotational joints have been replaced by a single distal joint 250 which comprises a joint device 100 according to the present invention. This joint device can be designed similarly to the joint device of the example shown in figures 1 to 4. In particular, the joint device 100 can provide two rotational degrees of freedom in just one joint, driven by three actuators. The actuators 30 for the three actuated ropes do not necessarily have to be part of this joint device. As shown very schematically in figure 4, these actuators 30 can also be integrated in the arm link 245 that connects the distal joint 250 with the proximal parts of the robot arm. This helps to minimize the weight and size of the outermost joint 250. An end effector can again be attached to this outermost joint 250 for a robotic application.

The example of Figure 6 is a relatively simple implementation of the joint device according to this invention, where it is used to replace two conventional rotational joints on the distal side of the arm. However other embodiments of a robot arm with one or more such joint devices are also possible. In particular, several such joint devices 100 could also be connected in series, replacing even more of the conventional rotational joints and providing a large range of motion at the site of the end effector with a relatively simple, light-weight and compact design. These joint device(s) 100 can also apply relatively large torques in the two rotational degrees of freedom that they provide.

## Claims

1. Robotic joint device (100) comprising
- a first rigid element (1) with a first central axis (A1) and a second rigid element (2) with a second central axis (A2),
- where the first rigid element (1) has a base member (10) and an elongated rod (15) which is rigidly attached to the base member (10), the rod (15) extending along the first central axis (A1) and being aligned with the second central axis (A2) when the joint device is in a central reference position,
- where the first rigid element (1) has three or four first anchor points (P1) distributed over the periphery of the first rigid element (1),
- where the second rigid (2) element has three or four second anchor points (P2) distributed over the periphery of the second rigid element (2), and each second anchor point (P2) is connected to a corresponding first anchor point (P1) by an actuated rope (Ra),
- where the second rigid element (2) has at least three further anchor points (P3) distributed over the periphery of the second rigid element (2), and each further anchor point (P3) is connected to a tip (17) of the elongated rod (15) of the first rigid element (1) by a passive rope (Rp),
- where the total number of actuated ropes (Ra) is three or four and the robotic joint device provides a total of two rotational degrees of freedom.

2. Joint device according to claim 1,
- where the first anchor points (P1) define a first circle with radius r1,
- where the second anchor points (P2) define a second circle with radius r2,
- and where r2 is larger than r1.

3. Joint device according to claim 2,
- where the elongated rod (15) extends over an effective rod length (1) between its tip (17) and the center (C1) of the first circle,
- where the center (C1) of the first circle and the center (C2) of the second circle are separated by a distance (d) in the central reference position,
- where this distance (d) is smaller than the effective rod length (1).

4. Joint device according to any one of claims 1 to 3, where the second rigid element (2) has a base member (20) with the shape of a ring or a dome.

5. Joint device according to any one of the preceding claims,
- where the first anchor points (P1) are evenly distributed over the periphery of the first rigid element (1)
- and the second anchor points (P2) are evenly distributed over the periphery of the second rigid element (2).

6. Joint device according to any one of the preceding claims, where the actuated ropes (Ra) are actuated by linear actuators.

7. Joint device according to any one of the preceding claims, where the actuated ropes (Ra) are each actuated by a combination of a rotational actuator and a spool.

8. Joint device according to any one of the preceding claims, where the second rigid element is configured to be a base element and the first rigid element is configured to be a movable element.

9. Joint device according to any one of the preceding claims, where the first rigid element is configured to be a base element and the second rigid element is configured to be a movable element.

10. Robot arm, comprising one or more robotic joints, where at least one selected robotic joint comprises a joint device according to one of the preceding claims.

11. Robot arm according to claim 10, comprising one or more further robotic joints, each of which provides a single rotational degree of freedom.

12. Robot arm according to claim 11, where the at least one selected robotic joint is a distal joint and the at least one further robotic joint is a proximal joint.

13. Robot arm according to one of claims 10 to 12, where the actuators for the at least one selected robotic joint are located within an arm link which is positioned on a proximal side of the robot arm relative to the selected robotic joint.

14. Robot arm according to one of claims 10 to 13, where one of the selected robotic joints carries an end effector.

15. Robot arm according to one of claims 10 to 14, comprising two or more selected robotic joints, each comprising a joint device according to one of the claims 1 to 9,
- where the selected robotic joints are mechanically connected in series.
